# EUROPEAN PATENT SPECIFICATION

(11) **EP 3 995 798 B1**
(45) Date of publication and mention of the grant of the patent: **28.10.2026**
(21) Application number: 21206154.3
(22) Date of filing: 03.11.2021
(51) Int. Cl.: G01K 1/02, G01K 11/3213

(54) **OPTOELECTRONIC TRANSDUCER MODULE FOR THERMOGRAPHIC TEMPERATURE MEASUREMENTS**
OPTOELEKTRONISCHES WANDLERMODUL FÜR THERMOGRAPHISCHE TEMPERATURMESSUNGEN
MODULE TRANSDUCTEUR OPTOÉLECTRONIQUE POUR LES MESURES THERMOGRAPHIQUES DE TEMPÉRATURE

(30) Priority: 05.11.2020 US 202063110193 P
(43) Date of publication of application: 11.05.2022
(73) Proprietor: Accelovant Technologies Corporation, North Vancouver, BC V7P 3P3 (CA)
(72) Inventor: MECL, Ondrej, North Vancouver, V7P 0A3 (CA); JOHNSON, Noah John Joe, North Vancouver, V7P 0A3 (CA); WEISS, Kevin Matthew, North Vancouver, V7P 0A3 (CA)
(74) Representative: J A Kemp LLP

(56) References cited:
- CN-A- 105 466 596
- US-A- 5 191 208

## Description

### Technical Field

The present disclosure generally relates to an optoelectronic transducer module and more particularly to an optoelectronic transducer module with integrated signal processing for thermographic temperature measurements.

### Background

Unless otherwise indicated herein, the materials described in this section are not prior art to the claims in this application and are not admitted to be prior art by inclusion in this section.

A fiber optic temperature sensor such as a phosphor based sensor is a fiber optic probe that delivers excitation light to a sensing material (e.g., phosphor) and uses luminescence emitted from the phosphor to determine the temperature of an object that is in contact with the sensing material. Typically, thermographic phosphors when excited with light within a certain wavelength range, emit a light within a different wavelength range. Certain characteristics of the emitted light change with temperature including brightness, color, and afterglow duration. The response of the emitted light to temperature is monitored by various methods, such as analyzing the change in emission intensity at a single wavelength range or the change in intensity ratio of two or more wavelength ranges, lifetime decay, or shift in emission wavelength peak. Phosphor used for measuring the temperature of an object is either coated directly on its surface or placed within a probe and brought in contact with the surface, which is then illuminated with a light source and the temperature of the object is determined based on the response of the emitted light.

Standard fiber optic temperature measuring systems known in the prior art comprise a fiber optic probe with an active sensing material at its tip which is connectable to an opto-electronics that process the detected signals and also include calibration data. Usually, a single calibration curve is used for calibrating certain product families of fiber optic sensors which may reduce the sensor's accuracy. Using a calibration curve that individually matches with the sensing elements is not appealing for users since associated optoelectronics are not interchangeable limiting the use of such sensors. Some known sensors, as disclosed in WO2021051204, describe a fiber optic temperature sensor with a calibration data that is stored outside of the optoelectronics housing (positioned either in the fiber optic probe or the connector) such that the same (universal) optoelectronics can be used with different calibration data. Failure of the opto-electronics in fiber optic temperature sensors is often associated with major downtime and costs in manufacturing, especially in the semiconductor industry. Currently in the fiber optic temperature sensing industry there is no opto-electronic conversion module available that is replaceable during operation (hot-swappable) to avoid big downtime. Users cannot replace during instrument operation failed opto-electronic transducers or populate (configure) the number of channels with opto-electronic modules to be used. CN 105466596 A discloses a train axle temperature monitoring system based on fluorescence fiber temperature measurement.

Most common failure of the opto-electronic transducer is failure of an excitation light source (LED failure). When the LED fails, the manufacturing process have to be shut down to exchange the failed optoelectronic transducer.

### Brief Description of the Drawings

Throughout the drawings, reference numbers may be re-used to indicate correspondence between referenced elements. The drawings are provided to illustrate example embodiments described herein and are not intended to limit the scope of the disclosure. Sizes and relative positions of elements in the drawings are not necessarily drawn to scale. For example, the shapes of various elements and angles are not drawn to scale, and some of these elements are arbitrarily enlarged and positioned to improve drawing legibility.
FIG.1 is a schematic view of an example of an opto-electronic transducer module of the present invention.
FIG. 2 is a schematic view of another example of an opto-electronic transducer module of the present invention.
FIG.3 is a schematic view of an example of an opto-electronic platform with six channels each connected to an individual opto-electronic transducer module.
FIG. 4 is a photography example of an opto-electronic platform with multiple channels for opto-electronic transducer modules.

### Summary

The invention provides a system for thermographic temperature measurement according to claim 1.

In addition to the aspects and embodiments described above, further aspects and embodiments will become apparent by reference to the drawings and study of the following detailed description.

### Detailed Description of Specific Embodiments

Typically, the opto-electronics transducers usually used in fiber optic temperature measurement system exhibited slower response time compared with high speed control loops they are part of. This is due to combined effects of sensor active material, probe design, interrogation electronics speed and data collection/conversion delays. Usually the opto-electronics transducers used in fiber optic temperature measurement systems are designed with a single processor that performs multiple functions, such as for example interrogation of sensors (analog-to-digital (AD) conversion and signal processing) as well as communicating with external digital systems and converting digital signal to analog values (4-20mA) for temperature control. Inherent sensitivity of optical measurement, AD conversion and computation combined with non-deterministic nature of digital interface communication imposes limitations of single processor design on response and communication efficiency. The opto-electronics transducer module of the present invention is a standalone optoelectronic transducer module with a dedicated processor for processing the luminescence signal received from the fiber optic sensor and which is pluggable into an external data processing and power supply and conditioning system. The standalone optoelectronic transducer module is powered by the external data processing and power supply and conditioning system such that it can be readily replaced during operation from and in any suitable higher-level data processing system. Such modular configuration of optoelectronic transducer allows for scalable fast measurements, data collection and data transfer.

For the purpose of this application "standalone" shall mean transducer module that contain all hardware, firmware and calibrations necessary to be able to interrogate fiber optic temperature sensor connected to its optical port. It means that it is manufactured as a module and tested/calibrated as a standalone unit with functionality (e.g., measuring luminescent decay) verified and calibrated and thus can be exchanged between the different systems while still retaining all functionality of thermographic temperature measurement with calibration data. For the purpose of this application "pluggable" shall mean that the standalone optoelectronic module can be plugged into a higher-level data processing system by the user. The higher-level data processing systems cannot perform measurement functions without the optoelectronic module(s) being plugged in. The optoelectronic module(s) can be exchanged (plugged/unplugged) by the user without the use of tools. The optoelectronic module contains predefined electrical/communication interface which the external data processing system must adhere to. After plugging the optoelectronic module into the higher-level data processing system, it is initiated and starts its operation.

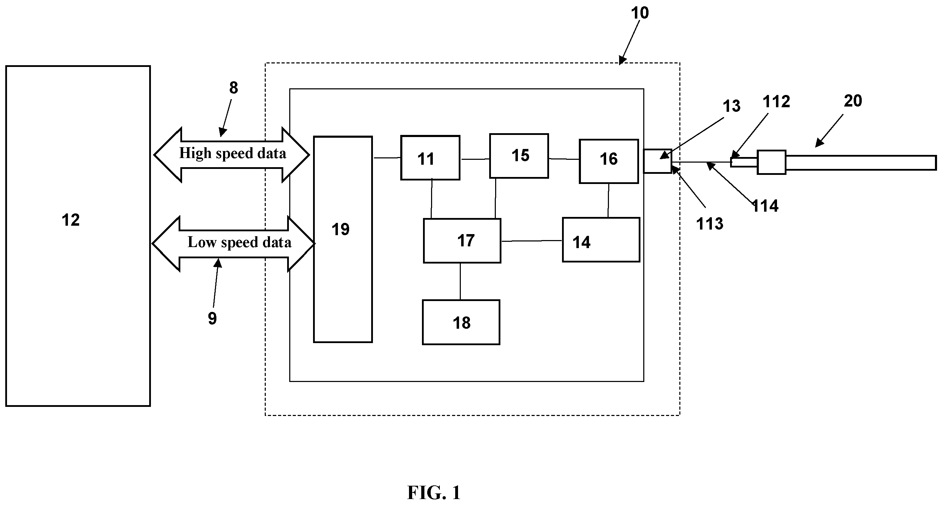

FIG. 1 illustrates an example of a standalone opto-electronics transducer module 10. The module 10 can be a Small Form-Factor Pluggable (xFOT) module. The modular design allows to swap failed modules 10 without shutting down the manufacturing process. This also allows for user's flexibility in configuring the systems for specific application. The module can be a self-contained interrogator and includes excitation and detection optics and circuitry as well as a calibration and configuration data.

The opto-electronic transducer module 10 is configured so that it integrates signal processing means that are used in thermographic temperature measurement. The module 10 comprises a housing with a mounting means, such as plug to be mounted into a channel of any suitable higher-level data processing system. The housing can comprise a light source 14 that provides an excitation light, an optical element 16 to couple the excitation light to an optical port and a detector 15 coupled to the optical element 16 to detect a light emitted from an active material coupled to a tip of a fiber optic probe 20. The light source can be an LED or a lamp that can provide for example an UV light with a wavelength between 200-400 nm or light in the blue to green wavelength range (e.g. 400 - 600 nm). In one embodiment, the light source 14 can be multiple LEDs as a cluster. In one implementation the light source 14 can comprise two or more light sources (LEDs) that can be redundant excitation sources in case the main LED fails. The optical element 16 can be an optical splitter that couples the excitation light to the optical port. A connector 13 is in communication with the optical port and is configured to connect the optoelectronic transducer module 10 to the fiber optic probe 20. In one embodiment, the light source 14 can be a flip chip LEDs with multiple LEDs in close proximity forming a tight cluster allowing for coupling into the optical port using the same optics (e.g. optical splitter and/or any lenses) as when singular LED is used. In another embodiment, the redundant active elements (LEDs) are optically coupled in the same optical path utilizing cold mirrors and lenses and focused in the same optical port.

In one implementation, the detector 15 can be a photodiode that can convert the optical signal (emitted light) into an electrical signal. The photons absorbed by the photodetector (e.g. photodiode) generate an electrical current. In some embodiments, the electrical signal can be intensified using an amplifier (not shown). A module processing unit 17 is operatively coupled to the light source 14 and the detector 15 and is configured to convert the electrical signal into a set of digital signals/results. In one embodiment, a receiver and power monitor 11 can be used to monitor the intensity of the excitation light and provide data to the processing unit 17 that is configured to switch over to any of the redundant LED when failure of the excitation light source is detected (e.g., if light intensity level degrades and reaches a preset value).

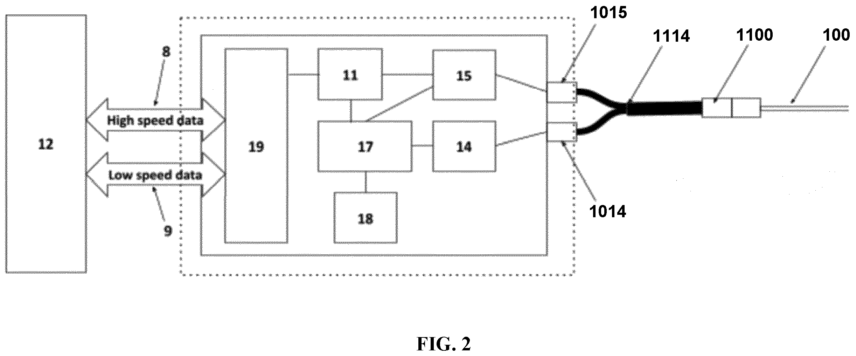

The optical element 16 can comprise a collimator lenses and/or cold mirror to split the excitation light and the emitted light. In one embodiment, the optical element 16 can be a fiber optic bundle split to separate the excitation light from the emitted light. In the embodiment shown the FIG. 2, the optical element 16 is replaced by a transmitter and receiver with the splitter being formed externally with fiber bundle extension cord/splitter. It can comprise an illumination connector 1014 to couple the light source 14 to the fiber bundle 1114 and a fiber optic probe 1020 and a detection connector 1015 to couple to the detector 15. Thus, the fiber bundle 1114 comprises a first bundle transmitting the excitation light to the active material and a second fiber bundle conveying the emitted light back to the detector 15.

The module processing unit 17 can include a non-volatile memory 18 with a configuration data and calibration data related to the fiber optic probe 20 and the active sensing material. The module 10 further comprises a high-speed circuitry 8 and a low-speed circuitry 9 in communication with an external data processing and power supply and conditioning system 12 in site over a data buffer 19. The high-speed circuitry 8 allows high speed data transfer for data aggregation in the external data processing and power supply and conditioning system 12 while the low-speed circuitry 9 is configured to conduct configuration and firmware upgrade in the module. This configuration of multiprocessing architecture for fiber optic temperature measuring systems provides standalone optoelectronic transducer module 10 that can be closely coupled with a sensing medium thus resulting in better sensing signal quality. Each optoelectronic transducer module 10 has a dedicated processor 17 for each individual sensor (probe 20) so that all optical measurement, calculation and conversion of optical to digital data are performed locally in the module 10. Using dedicated high speed data transfer bus 19, the module 10 communicates with the external (dedicated master) data processing and power supply and conditioning system 12 where all data management, power supply and user interface services are performed. The temperature values can be autonomously collected in the external data processing and power supply and conditioning system 12 independently of the measurement. The external data processing and power supply and conditioning system 12 can have a dedicated fast real-time operating system (RTOS) processor that can process data as it comes in real-time without buffer delays and can provide 1) interrogating the module 10 (xFOT)) sensors, 2) provide collected temperature measurements to digital interface devices (EtherCAT, RS-485) and analog interfaces (4-20mA) and 3) provide system configuration interface for optoelectronic transducer module 10, The optoelectronic transducer module 10 with integrated signal processing can provide improved performance of the fiber optic temperature measuring system including the response time compared to the optoelectronic transducer with single processor, and parallel/distributed approach to computing and data collection and interface handling increases accuracy and response time of large sensor network used for the measurements.

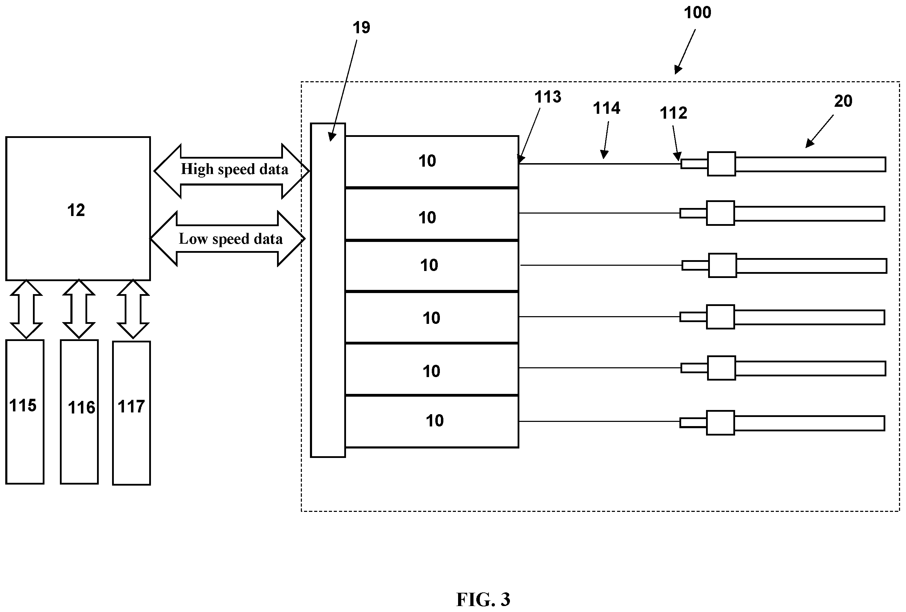

By moving the power supply, communication interfaces and control devices outside the optoelectronic transducer module 10, it can be scaled to smaller sizes. FIG. 3 illustrates an example of a measurement system with a housing 100 that has at least one receiving port (channel) to connect the at least one optoelectronic transducer module 10 to the external (master) data processing and power supply and conditioning system 12. In the illustratable example in FIG. 2 there are 6 channels with 6 modules 10 connected to 6 individual fiber optic probes 20. All 6 modules 10 communicate with the external data processing and power supply and conditioning system 12 using the dedicated high speed data transfer bus 19. The external data processing and power supply and conditioning system 12 can comprise digital interface devices 115, 116 (i.e., EtherCAT, RS-485) and analog interface devices 117 (4-20mA) for temperature measurement.

The data processing and power supply and conditioning system 12 can be a proportional integral derivative (PID) controller, an industrial controller, a sensing network distributor, etc., such that the module 10 can be integrated by a third party in the PID controller to minimize response time and latency of the control; or it can be part of the distributed sensing network around a semiconductor tool; or can be integrated in data aggregator for monitoring purposes.

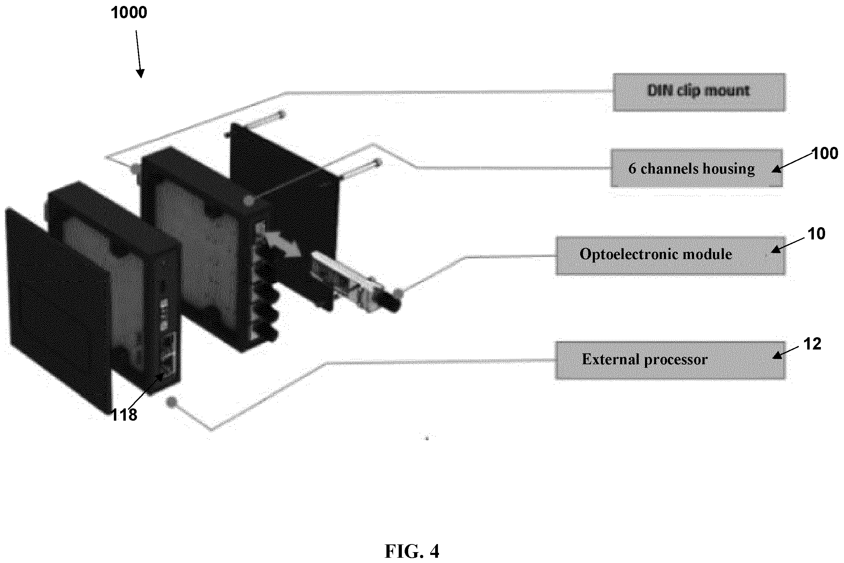

FIG. 4 illustrates a photography example of a measurement system 1000 with 6 channels housing 100 where 6 independent optoelectronic transducer module 10 can be hot-swappable plugged in through a plug-in port. The external data processing and power supply and conditioning system 12 comprises one or more communication interface ports 118 coupled to the processing unit 12.

The fiber optic probe 20 with an active sensing material is connected to each of the modules 10. The active material is positioned near the tip of the probe 20. The probe 20 is functionally coupled to the first end 112 of a fiber or a fiber bundle 114. A second end 113 of the fiber or a fiber bundle 114 is connected to the connector 13 of the opto-electronics transducer module 10.

In one implementation, the active material is a thermographic phosphor which when illuminated with an excitation light emits light in a wavelength different from the excitation light. For example, the excitation light can be UV light with a wavelength between 200-400 nm or light in the blue to green wavelength range (e.g. 400 - 600 nm). When the active material is illuminated with such excitation light it will emit fluorescence light in the red wavelength range of 600 - 800 nm. The response of the emitted light to temperature is monitored by various methods, such as analyzing the change in emission intensity at a single wavelength range or the change in intensity ratio of two or more wavelength ranges, lifetime decay, or shift in emission wavelength peak. The fiber or a fiber bundle is configured to transmit the excitation light and the emitted light. **In** one embodiment, the fiber or a fiber bundle can comprise an excitation light guide (not shown) for transmitting the excitation light to the active material and an emitted light guide (not shown) for transmitting light emitted from the active material.

The opto-electronics transducer module 10 comprises a housing that can be made of a molded plastic or any other suitable material and can have an inner cavity that houses the component of the opto-electronics transducer module 10.

While particular elements, embodiments and applications of the present disclosure have been shown and described, it will be understood, that the scope of the disclosure is not limited thereto, since modifications can be made by those skilled in the art without departing from the scope of the present disclosure, particularly in light of the foregoing teachings. Thus, for example, in any method or process disclosed herein, the acts or operations making up the method/process may be performed in any suitable sequence and are not necessarily limited to any particular disclosed sequence. Elements and components can be configured or arranged differently, combined, and/or eliminated in various embodiments. The various features and processes described above may be used independently of one another, or may be combined in various ways. All possible combinations and subcombinations are intended to fall within the scope of this disclosure. Reference throughout this disclosure to "some embodiments," "an embodiment," or the like, means that a particular feature, structure, step, process, or characteristic described in connection with the embodiment is included in at least one embodiment. Thus, appearances of the phrases "in some embodiments," "in an embodiment," or the like, throughout this disclosure are not necessarily all referring to the same embodiment and may refer to one or more of the same or different embodiments.

Various aspects and advantages of the embodiments have been described where appropriate. It is to be understood that not necessarily all such aspects or advantages may be achieved in accordance with any particular embodiment. Thus, for example, it should be recognized that the various embodiments may be carried out in a manner that achieves or optimizes one advantage or group of advantages as taught herein without necessarily achieving other aspects or advantages as may be taught or suggested herein.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without operator input or prompting, whether these features, elements and/or steps are included or are to be performed in any particular embodiment. No single feature or group of features is required for or indispensable to any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. The example calculations, simulations, results, graphs, values, and parameters of the embodiments described herein are intended to illustrate and not to limit the disclosed embodiments. Other embodiments can be configured and/or operated differently than the illustrative examples described herein.

## Claims

1. A system for thermographic temperature measurement comprising:
a. a data processing and power supply and conditioning system (12) comprising:
i. a housing with a plurality of receiving ports;
ii. a data processing unit for aggregating data;
iii. a communication means for receiving and transmitting data; and
iv. a power supply and conditioning unit; and
b. an optoelectronic standalone transducer module (10) with integrated signal processing for use in thermographic temperature measurement comprising:
i. a housing having a mounting means to plug into at least one receiving port of the data processing and power supply and conditioning system (12);
ii. a light source (14) to provide an excitation light;
iii. an optical element (16) for coupling the light to an optical port;
iv. a connector (13) configured to connect the optoelectronic transducer module (10) to a fiber optic sensor (20);
v. a detector (15) coupled to the optical port to detect an emitted light from the fiber optic sensor (20) and convert the detected emitted light into an electrical signal;
vi. a module processing unit (17) coupled to the light source (14) and the detector (15) configured to convert the electrical signal into a set of digital results, the module processing unit (17) including a non-volatile memory with a configuration and calibration data related to the detector and the fiber optic sensor (20), the module processing unit (17) processing the thermographic temperature measurement taken with the fiber optic sensor (20);
vii. a high speed circuitry (8) in communication with the data processing and power supply and conditioning system (12) for data aggregation; and
viii. a low speed circuitry (9) in communication with the data processing and power supply and conditioning system (12) for configuration and firmware upgrade in the module,
wherein the standalone optoelectronic transducer module (10) is pluggable in a receiving port of the plurality of receiving ports of the data processing and power supply and conditioning system (12) such that the standalone optoelectronic transducer module (10) is powered by the data processing and power supply and conditioning system (12).

2. The system of claim 1, wherein the light source (14) comprises two or more redundant light sources.

3. The system of claim 2, wherein the light source (14) is a cluster of multiple LEDs.

4. The system of claim 2 or claim 3, wherein the optoelectronic transducer module (10) further comprises an optical receiver and power monitor coupled to the light source (14) and the module processing unit (17) to monitor an intensity of the excitation light and provide data to the module processing unit to switch over to any of the redundant light sources when failure of the excitation light source is detected.

5. The system of claim 4, wherein the optoelectronic transducer module (10) further comprises a power optical sensor operatively coupled to the light source (14) to measure and monitor a power output of the light source (14), the sensor sending input signals to the module processing unit (17) when the power output of the light source reaches a pre-determined value to trigger the at least one redundant light source.

6. The system of one of claims 1 to 5, wherein the optoelectronic transducer module (10) further comprises a high-speed data transfer bus (19) for communication with the data processing and power supply and conditioning system (12) .

7. The system of one of claims 1 to 6, wherein the optoelectronic transducer module (10) further comprises an optoelectronic housing with at least one plug-in channel to detachably plug-in at least one optoelectronic transducer module.

8. The system of claims 1 to 7, wherein the data processing and power supply and conditioning system (12) is an industrial controller.

9. The system of claims 1 to 8, wherein the data processing and power supply and conditioning system is a proportional integral derivative (PID) controller.

10. The system of claims 1 to 9, wherein the data processing and power supply and conditioning system is a sensing network distributor.

## Patentansprüche

1. System zur thermografischen Temperaturmessung, das umfasst:
a. ein Datenverarbeitungs- sowie Stromversorgungs- und Aufbereitungssystem (12), das umfasst:
i. ein Gehäuse mit einer Vielzahl von Empfangsanschlüssen;
ii. eine Datenverarbeitungseinheit zur Aggregation von Daten;
iii. ein Kommunikationsmittel zum Empfangen und Senden von Daten; und
iv. iv. eine Stromversorgungs- und Aufbereitungseinheit; und
b. ein optoelektronisches, eigenständiges Messmodul (10) mit integrierter Signalverarbeitung zur Verwendung bei der thermografischen Temperaturmessung, das umfasst:
i. ein Gehäuse mit einem Befestigungsmittel zum Einstecken in mindestens einen Anschluss des Datenverarbeitungs-, Stromversorgungs- und Aufbereitungssystems (12);
ii. eine Lichtquelle (14) zur Bereitstellung von Anregungslicht;
iii. ein optisches Element (16) zum Koppeln des Lichts in einen optischen Anschluss;
iv. einen Stecker (13), der so konfiguriert ist, dass er das optoelektronische Wandlermodul (10) mit einem Glasfasersensor (20) verbindet;
v. einen Detektor (15), der mit dem optischen Anschluss gekoppelt ist, um von dem faseroptischen Sensor (20) emittiertes Licht zu erfassen und das erfasste emittierte Licht in ein elektrisches Signal umzuwandeln;
vi. eine Modulverarbeitungseinheit (17), die mit der Lichtquelle (14) und dem Detektor (15) gekoppelt ist und dafür konfiguriert ist, das elektrische Signal in eine Reihe digitaler Ergebnisse umzuwandeln, wobei die Modulverarbeitungseinheit (17) einen nicht-flüchtigen Speicher mit Konfigurations- und Kalibrierungsdaten enthält, die sich auf den Detektor und den faseroptischen Sensor (20) beziehen, wobei die Modulverarbeitungseinheit (17) die mit dem faseroptischen Sensor (20) vorgenommene thermografische Temperaturmessung verarbeitet;
vii. eine Hochgeschwindigkeitsschaltung (8), die mit dem Datenverarbeitungs- sowie Stromversorgungs- und -Aufbereitungssystem (12) zur Datenaggregation in Kommunikation steht; und
viii. eine Langzeitschaltung (9), die mit dem Datenverarbeitungs- sowie Stromversorgungs- und Aufbereitungssystem (12) zur Konfiguration und Firmware-Aktualisierung in dem Modul in Kommunikation steht,
wobei das eigenständige optoelektronische Wandlermodul (10) in eine der zahlreichen Empfangsanschlüsse der Datenverarbeitungs- sowie Stromversorgungs- und Aufbereitungssysteme einsteckbar ist (12) so dass das eigenständige optoelektronische Wandlermodul (10) vom Datenverarbeitungs- und Stromversorgungs- und - Aufbereitungssystem (12) mit Strom versorgt wird.

2. System nach Anspruch 1, wobei die Lichtquelle (14) zwei oder mehr redundante Lichtquellen umfasst.

3. System nach Anspruch 2, wobei die Lichtquelle (14) ein Cluster aus mehreren LEDs ist.

4. System nach Anspruch 2 oder Anspruch 3, wobei das optoelektronische Wandlermodul (10) ferner einen optischen Empfänger und einen Leistungsmonitor umfasst, die mit der Lichtquelle (14) und der Modulverarbeitungseinheit (17) gekoppelt sind, um eine Intensität des Anregungslichts zu überwachen und Daten an die Modulverarbeitungseinheit zu liefern, um auf eine der redundanten Lichtquellen umzuschalten, wenn ein Ausfall der Anregungslichtquelle erfasst wird.

5. System nach Anspruch 4, wobei das optoelektronische Wandlermodul (10) ferner einen optischen Leistungssensor umfasst, der funktionsmäßig mit der Lichtquelle (14) gekoppelt ist, um die Ausgangsleistung der Lichtquelle (14) zu messen und zu überwachen, wobei der Sensor Eingangssignale an die Modulverarbeitungseinheit (17) sendet, wenn die Ausgangsleistung der Lichtquelle einen vorbestimmten Wert bestimmt hat, um die mindestens eine redundante Lichtquelle auszulösen.

6. System nach einem der Ansprüche 1 bis 5, wobei das optoelektronische Wandlermodul (10) ferner einen Hochgeschwindigkeits-Datenübertragungsbus (19) zur Kommunikation mit dem Datenverarbeitungs- sowie Stromversorgungs- und - Aufbereitungssystem (12) umfasst.

7. System nach einem der Ansprüche 1 bis 6, wobei das optoelektronische Wandlermodul (10) ferner ein optoelektronisches Gehäuse mit mindestens einem Steckkanal zum lösbaren Einstecken mindestens eines optoelektronischen Wandlermoduls umfasst.

8. System nach einem der Ansprüche 1 bis 7, wobei das Datenverarbeitungs- sowie Stromversorgungs- und -Aufbereitungssystem (12) eine industrielle Steuerung ist.

9. System nach einem der Ansprüche 1 bis 8, wobei das Datenverarbeitungs- und Stromversorgungs- und -Aufbereitungssystem ein Proportional-Integral-Differential-Regler (PID-Regler) ist.

10. System nach einem der Ansprüche 1 bis 9, wobei das Datenverarbeitungs- und Stromversorgungs- und -Aufbereitungssystem ein Sensornetzwerkverteiler ist.

## Revendications

1. Système de mesure thermographique comprenant :
a. un système de traitement de données, d'alimentation électrique et de conditionnement (12) comprenant :
i. un boîtier pourvu d'une pluralité de ports de réception,
ii. une unité de traitement de données destinée à agréger des données,
iii. un moyen de communication destiné à recevoir et à transmettre des données, et
iv. une unité d'alimentation électrique et de conditionnement, et
b. un module transducteur optoélectronique (10) autonome pourvu d'un dispositif de traitement de signal intégré, servant à la mesure thermographique, comprenant :
i. un boîtier présentant un moyen de montage permettant un branchement dans au moins un port de réception du système de traitement de données, d'alimentation électrique et de conditionnement (12),
ii. une source de lumière (14) destinée à fournir une lumière d'excitation,
iii. un élément optique (16) destiné au couplage de la lumière dans un port optique,
iv. un connecteur (13) conçu pour raccorder le module transducteur optoélectronique (10) à un capteur à fibre optique (20),
v. un détecteur (15) couplé au port optique afin de détecter une lumière émise par le capteur à fibre optique (20) et de convertir la lumière émise détectée en un signal électrique,
vi. une unité de traitement de module (17) couplée à la source de lumière (14) et au détecteur (15), conçue pour convertir le signal électrique en un ensemble de résultats numériques, l'unité de traitement de module (17) comprenant une mémoire non volatile contenant des données de configuration et d'étalonnage relatives au détecteur et au capteur à fibre optique (20), l'unité de traitement de module (17) traitant la mesure thermographique réalisée au moyen du capteur à fibre optique (20),
vii. un circuit à haute vitesse (8) en communication avec le système de traitement de données, d'alimentation électrique et de conditionnement (12) pour l'agrégation des données, et
viii. un circuit à basse vitesse (9) en communication avec le système de traitement de données, d'alimentation électrique et de conditionnement (12) pour la configuration et l'actualisation de micrologiciel du module,
le module transducteur optoélectronique (10) autonome pouvant être branché dans un port de réception de la pluralité de ports de réception du système de traitement de données, d'alimentation électrique et de conditionnement (12) pour permettre au module transducteur optoélectronique (10) autonome d'être alimenté par le système de traitement de données, d'alimentation électrique et de conditionnement (12).

2. Système selon la revendication 1, dans lequel la source de lumière (14) comprend au moins deux sources de lumière redondantes.

3. Système selon la revendication 2, dans lequel la source de lumière (14) est un groupe de multiples LED.

4. Système selon la revendication 2 ou la revendication 3, dans lequel le module transducteur optoélectronique (10) comprend en outre un récepteur optique et un moniteur de puissance couplés à la source de lumière (14) et à l'unité de traitement de module (17) afin de surveiller l'intensité de la lumière d'excitation et de fournir des données à l'unité de traitement de module pour basculer vers l'une quelconque des sources de lumière redondantes lorsqu'une défaillance de la source de lumière d'excitation est détectée.

5. Système selon la revendication 4, dans lequel le module transducteur optoélectronique (10) comprend en outre un capteur optique de puissance couplé de manière fonctionnelle à la source de lumière (14) afin de mesurer et de surveiller la puissance de sortie de la source de lumière (14), le capteur envoyant des signaux d'entrée à l'unité de traitement de module (17) lorsque la puissance de sortie de la source de lumière atteint une valeur prédéterminée afin de déclencher l'allumage de l'au moins une source de lumière redondante.

6. Système selon l'une quelconque des revendications 1 à 5, dans lequel le module transducteur optoélectronique (10) comprend en outre un bus de transfert de données à haut débit (19) destiné à la communication avec le système de traitement de données, d'alimentation électrique et de conditionnement (12).

7. Système selon l'une quelconque des revendications 1 à 6, dans lequel le module de transducteur optoélectronique (10) comprend en outre un boîtier optoélectronique doté d'au moins un canal de raccordement permettant de brancher de manière amovible au moins un module de transducteur optoélectronique.

8. Système selon l'une quelconque des revendications 1 à 7, dans lequel le système de traitement de données, d'alimentation électrique et de conditionnement (12) est un dispositif de commande industriel.

9. Système selon l'une quelconque des revendications 1 à 8, dans lequel le système de traitement de données, d'alimentation électrique et de conditionnement est un dispositif de commande proportionnel-intégral-dérivé (PID).

10. Système selon l'une quelconque des revendications 1 à 9, dans lequel le système de traitement de données, d'alimentation électrique et de conditionnement est un répartiteur de réseau de détection.
